# EUROPÄISCHE PATENTSCHRIFT

(11) **EP 0 560 808 B1**
(45) Veröffentlichungstag und Bekanntmachung des Hinweises auf die Patenterteilung: **29.03.1995**
(21) Anmeldenummer: 91920438.8
(22) Anmeldetag: 28.11.1991
(51) Int. Cl.: C01F 7/14

(54) **POLYGLYCERINE IM BAYER-PROZESS**
POLYGLYCERINS IN THE BAYER PROCESS
UTILISATION DE POLYGLYCERINES DANS LE PROCEDE BAYER

(30) Priorität: 07.12.1990 DE 4039053
(43) Veröffentlichungstag der Anmeldung: 22.09.1993
(73) Patentinhaber: Henkel Kommanditgesellschaft auf Aktien, 40191 Düsseldorf (DE)
(72) Erfinder: HACHGENEI, Johannes, D-4000 Düsseldorf 13 (DE); BUNTE, Reinhard, D-4047 Dormagen 11 (DE); FÖLL, Jürgen, D-4000 Düsseldorf 30 (DE)
(86) Internationale Anmeldenummer: EP9102251
(87) Internationale Veröffentlichungsnummer: WO9210426

(56) Entgegenhaltungen:
- EP-A- 0 271 104
- EP-A- 0 286 034
- EP-A- 0 327 660
- CHEMICAL ABSTRACTS, vol. 92, no. 12, 24 March 1980, Columbus, Ohio, US; abstracts no. 96203 S, "Crystallization of homogeneously precipitated aluminia hydrate gels in aqueous solutions of various organic reagents" page 111: cited in the application, see abstract

## Beschreibung

Die Erfindung betrifft ein Verfahren zur Bildung eines Aluminiumoxidtrihydrat-Kristallisats nach dem Bayer-Verfahren.

Beim Bayer-Verfahren handelt es sich bekanntermaßen um ein Verfahren zur Gewinnung von Aluminiumhydroxid aus Bauxit (Büchner, Schliebs, Winter, Büchel, Industrielle anorganische Chemie, VCH Weinheim 1984, S. 259 und 260; Ullmanns Encyklopädie der technischen Chemie, 4. Auflage, Band 7, VCH Weinheim 1982, S. 305 ff.). Das Verfahren gliedert sich in die folgenden Hauptschritte:
- Gemahlener Bauxit wird mit wäßriger Natronlauge bei Temperaturen im Bereich von 140 bis 200 °C im Autoklaven unter Bildung von löslichem Natriumaluminat aufgeschlossen.
- Eisenhaltiger Rotschlamm wird abgetrennt.
- Das an Aluminiumhydroxid übersättigte Filtrat wird langsam unter Rühren abgekühlt und mit einer großen Menge an Aluminiumhydroxid geimpft ("Ausrühren"), wobei ein großer Teil des gelösten Aluminiumhydroxids als Hydrargillit anfällt.
- Das so gewonnene Aluminiumhydroxid wird abfiltriert und die an Aluminiumhydroxid verarmte Lauge in den Kreisprozeß zurückgeführt.

Die Kristallisation des Aluminiumhydroxids ist kinetisch stark gehemmt, so daß die Fällung bei langsamer Temperaturabsenkung, beispielsweise 10 °C, innerhalb von 24 bis 48 h und unter Zugabe einer großen Menge an Kristallkeimen durchgeführt wird. Neben der Kristallisation des Aluminiumhydroxids ist ebenfalls die Agglomeration feiner Partikel zum Aufbau größerer Kristallagglomerate von großer Bedeutung während des Ausrührprozesses. Der größte Teil des so gewonnenen Aluminiumhydroxids wird dann in einem weiteren Verfahrensschritt zu Aluminiumoxid calciniert.

Nach Aluminiumtaschenbuch, 14. Auflage 1988, S. 11 wird der weitaus größte Teil des erzeugten Oxids in den Aluminiumhütten zu Metall verarbeitet. Ein kleinerer Anteil, auch in Form von Hydroxid, findet verschiedenste Anwendung in Chemie, Keramik und auf anderen Gebieten. An das metallurgische Oxid werden besonders hohe Anforderungen gestellt. Insbesondere bevorzugt wird ein mäßig calciniertes Oxid mit einem alpha-Al₂O₃-Gehalt von weniger als 30 % und möglichst wenig Feinanteil einer Korngröße von weniger als 45 »m. Bedingt durch diese Forderung werden hohe Ansprüche an den Kristallisationsprozeß gestellt, der noch durch Verunreinigungen in der Kristallisationslösung beeinflußt werden kann. Solche Verunreinigungen sind vor allem die Salze von Huminsäuren und deren Abbauprodukte wie Natriumoxalat - siehe DE-A-36 09 662. Natriumoxalat ist besonders störend, da es ein ähnliches Kristallisationsverhalten wie Aluminiumhydroxid hat und selbst als Kristallisationskeim wirken kann. Dieser Umstand führt einerseits zu einem weniger reinen Hydroxid und andererseits zu deutlich kleineren Kristallen.

Im Stand der Technik wurden viele Bemühungen zur Verbesserung der Kristallisation von Aluminiumhydroxid unternommen, um gröbere Kristalle zu erhalten.

In der US-A-4 608 237 (DE-A-36 09 662) wird die Verwendung von Polymeren oder Copolymeren von Acryl- oder Methacrylsäure-Abkömmlingen zur Beeinflussung der Kristallisation von Aluminiumhydroxid beschrieben. Aus US-A-4 737 352 ist die Verwendung von Fettsäuren in einem Ölträger im Bayer-Verfahren bekannt, wodurch gröbere Kristalle erhalten werden sollen.

Aus Chemical Abstracts 92 (12), Referat 96203s ist bekannt, daß Glycerin die Kristallisation von Aluminiumhydroxid deutlich inhibiert.

Demgegenüber bestand die Aufgabe der vorliegenden Erfindung darin, das bekannte Verfahren zur Bildung von Aluminiumoxidtrihydrat-Kristallisat nach dem Bayer-Verfahren dahingehend zu verbessern, daß neue Kristallisationshilfsmittel für die Ausfällung des Aluminiumhydroxids zur Verfügung gestellt werden.

Überraschenderweise wurde gefunden, daß Polyglycerine schon in relativ geringen Konzentrationen in der Kristallisationslauge zu einem Aluminiumhydroxid-Niederschlag mit gegenüber dem Stand der Technik deutlich gröberem Kristallinitätsgrad führt.

Demgemäß besteht eine erste Ausführungsform der vorliegenden Erfindung in einem Verfahren zur Bildung eines Aluminiumoxidtrihydrat-Kristallisats nach dem Bayer-Verfahren durch
- Aufschließen von gemahlenem Bauxit,
- Abtrennen des Rotschlamms,
- Abkühlen des Filtrats und
- Auskristallisieren des gelösten Aluminiumhydroxids als Hydrargillit,
das dadurch gekennzeichnet ist, daß
vor und/oder während der Kristallisation Polyglycerine der allgemeinen Formel (I)

H-(OCH₂CHOH-CH₂)ₙ-OH (I)

wobei n eine ganze Zahl größer oder gleich 3 ist,
zugegeben werden.

Bei den Polyglycerinen handelt es sich um Polyether mit verbleibenden OH-Funktionen, die durch alkalisch katalysierte Kondensation von Glycerin gewonnen werden (siehe beispielsweise Ullmanns Encyclopedia of Industrial Chemistry, 5. Auflage, Band A12, S. 487 - 489). Wie bei Polykondensationen üblich, fällt hierbei nicht ein bestimmtes Homologes in reiner Form, sondern eine mehr oder weniger breite Verteilung an Polymerem an. In diesem Sinne handelt es sich bei den erfindungsgemäß zu verwendenden Polyglycerinen nicht um einzelne, definierte Kondensationsprodukte, bei denen der Index n für eine bestimmte Zahl steht, sondern vielmehr um Gemische von Kondensationsprodukten, wobei der Index "n" die statistische Verteilung der vorliegenden Polyglycerine angibt. Nach Ullmanns Encyclopädie der Technischen Chemie, 4. Auflage, Band 12, S. 374 haben Polyglycerine relative Molekülmassen von 166 (6-C-Atome) bis 2238 (90-C-Atome) und 4 bis 32 Hydroxylgruppen. Theoretisch können zwar unendlich lange Polymerketten hergestellt werden, jedoch bricht die Polykondensation in der Regel bei kürzeren Kettenlängen ab, so daß bisher nur von Kettenlängen unterhalb von n = 50 berichtet wurde. Da sich allgemein mit zunehmender Kettenlänge die Viskosität der Polyglycerine erhöht und damit deren Handhabbarkeit verschlechtert, besteht eine bevorzugte Ausführungsform der vorliegenden Erfindung darin, daß man Polygylcerine der allgemeinen Formel (I) einsetzt, bei denen n für eine Zahl im Bereich von 3 bis 30 steht. Bedingt durch die niedrigere Viskosität sind die kürzerkettigen Polyglycerine im Sinne der vorliegenden Erfindung bevorzugt.

Diglycerin liefert ebenso wie Monoglycerin selbst unakzeptable Korngrößenverteilungen, insbesondere Kristallisate mit einem sehr hohen Feinanteil. Es wird angenommen, daß handelsübliches Diglycerin noch gewisse Anteile an Monoglycerin enthält, das die Kristallisation von Aluminiumhydroxid inhibiert. Mit zunehmendem Kondensationsgrad ist jedoch davon auszugehen, daß der Anteil an Monoglycerin und damit auch die kristallisationsinhibierende Wirkung abnimmt. Diesem Effekt wirkt jedoch die erhöhte Viskosität der Polyglycerine mit zunehmender Kettenlänge entgegen, so daß besonders bevorzugte Polyglycerine im Sinne der vorliegenden Erfindung aus 3 bis 12 Glycerineinheiten bestehen.

Die einzusetzende Menge an Polyglycerinen der allgemeinen Formel (I) ist an sich nicht kritisch, sondern wird durch die technischen Anforderungen an das erwünschte Kristallisat bestimmt. Eine geringe Menge an Polyglycerinen der allgemeinen Formel (I) ist naturgemäß ohne Einfluß auf den Kristallisationsprozeß, während eine zu große Menge an Polyglycerinen der allgemeinen Formel (I) einerseits zu einer gewissen Verunreinigung des Aluminiumhydroxids führen kann, jedoch insbesondere unter dem Gesichtspunkt der Wirtschaftlichkeit des Fällungsverfahrens, insbesondere bei Betrachtung der außerordentlich großen Umsatzmengen im technischen Maßstab zu vermeiden ist.

Demgemäß besteht eine bevorzugte Ausführungsform des erfindungsgemäßen Verfahrens darin, daß man dem Filtrat des Bayer-Verfahrens Polyglycerine der allgemeinen Formel (I) in einer Menge von 0,01 bis 5 g/l zugibt. Eine darüberhinaus bevorzugte Ausführungsform sieht die Zugabe von 0,05 bis 2 g/l der Polyglycerine der allgemeinen Formel (I) zum Filtrat des Bayer-Verfahrens vor.

Im Sinne der vorliegenden Erfindung kann zur Ausfällung von Aluminiumhydroxid neben den Polyglycerinen der allgemeinen Formel (I) prinzipiell auch jedes andere Kristallisationshilfsmittel, das aus dem Stand der Technik bekannt ist, eingesetzt werden. Beispiele für aus dem Stand der Technik bekannte Kristallisationsmittel sind das oben erwähnte hochmolekulare Acryl- oder Methacrylsäure-Polymer oder -Copolymer oder die genannten Fettsäuren in einem Ölträger.

Die nachfolgenden Ausführungsbeispiele geben die vorliegende Erfindung wieder.

### Beispiele

Die nachfolgenden Ausführungsbeispiele zur Untersuchung des Einflusses der Kristallisationshilfsmittel wurden an nachgestellten Laugen eines Bayer-Prozesses durchgeführt. Die Laugen wiesen Zusammensetzungen auf, die auch in technischen Prozessen auftreten:
197,3 g/l Al(OH)₃ = 129 g/l Al₂O₃
45,6 g/l Na₂CO₃
278,0 g/l NaOH 50 % entspricht 108 g/l Na₂O, 184 g/l Na₂CO₃.

Diese Lösungen werden auch durch die folgenden Kennzahlen charakterisiert:
Stoffmengenverhältnis: Na₂O/Al₂O₃: 1,37
TC (total caustic, freie Alkalität): 184 g/l Na₂CO₃
TA (total alkali, Gesamtalkalität): 230 g/l Na₂CO₃ Al₂O₃/TC: 0,70.

400 ml dieser Lösung wurden heiß in einen Doppelmantel-Rundkolben vorgelegt, mit dem jeweiligen Kristallisationshilfsmittel versetzt und bei starkem Rühren während 21 h von 78 °C auf 71 °C abgekühlt. Danach wurde das gewonnene kristalline Al(OH)₃ abfiltriert, mehrmals gewaschen und bei 100 °C unter Vakuum getrocknet. Die Ausbeute an kristallinem Al(OH)₃ betrug in allen Beispielen ca. 30 g, ausgenommen beim Zusatz von Glycerin (0,5 g auf 400 ml) wurde eine Ausbeute von 6 g erhalten. Die Kristallgrößenverteilung wurde durch Sieben bestimmt.

Die nachfolgende Tabelle gibt in den Beispielen 1-6 und den Vergleichsbeispielen 1-3, die jeweils nach der obigen Vorschrift durchgeführt wurden, die Überlegenheit der erfindungsgemäß einzusetzenden Kristallisationshilfsmittel gegenüber dem Stand der Technik wieder.

**Tabelle**

| Bsp. | Kondensationsgrad Polyglycerin (n) | Menge an Polyglycerin in g/400 ml | Gewichtsanteile in Gew.-% an Al(OH)₃-Kristallen | | | |
|---|---|---|---|---|---|---|
| | | | <150»m | <100»m | <75»m | <45»m |
| 1 | 5 | 0,5 | 36 | 1 | 0,3 | - |
| 2 | 5 | 0,1 | 41 | 3 | 2 | 1 |
| 3 | 5 | 0,05 | 52 | 2 | 2 | 1 |
| 4 | 5 | 0,02 | 70 | 16 | 14 | 8 |
| 5 | 10 | 0,5 | 56 | 7 | 6 | 4 |
| 6 | 10 | 0,1 | 69 | 8 | 7 | 4 |
| Vgl.1 | - | - | 93 | 21 | 17 | 1 |
| Vgl.2 | 1 | 0,5 | 96 | 95 | 92 | 31 |
| Vgl.3 | 2 | 0,5 | 69 | 36 | 35 | 20 |

Die vorstehende Tabelle belegt, daß bereits der Zusatz von geringen Mengen an Polyglycerinen der allgemeinen Formel (I) zu der Aluminatlauge zu einer deutlichen Vergrößerung der gewonnenen Kristalle führt, während der nicht-erfindungsgemäße Zusatz von Glycerin (Vergleichsbeispiel 2) und Diglycerin (Vergleichsbeispiel 3) gegenüber dem Vergleichsbeispiel 1 ohne Zusatz von Kristallisationshilfsmittel nur eine geringfügige Vergrößerung der gewonnenen Kristalle führt.

Die Gewichtsanteile in Gewichtsprozent der Tabelle sind nicht auf 100 Gew.-% normiert, da jeweils die Summe der Anteile angegeben wird, die kleiner als die entsprechende Größe ist.

## Patentansprüche

1. Verfahren zur Bildung eines Aluminiumoxidtrihydrat-Kristallisats nach dem Bayer-Verfahren durch
- Aufschließen von gemahlenem Bauxit,
- Abtrennen des Rotschlamms,
- Abkühlen des Filtrats und
- Auskristallisieren des gelösten Aluminiumhydroxids als Hydrargillit,
dadurch gekennzeichnet, daß
vor und/oder während der Kristallisation Polyglycerine der allgemeinen Formel (I)
H-(OCH₂CHOH-CH₂)ₙ-OH (I)
wobei n eine ganze Zahl größer oder gleich 3 ist, zugegeben werden.

2. Verfahren nach Anspruch 1, dadurch gekennzeichnet, daß man Polyglycerine der allgemeinen Formel (I) zugibt, bei denen n für eine Zahl im Bereich von 3 bis 30 steht.

3. Verfahren nach Anspruch 2, dadurch gekennzeichnet, daß man Polyglycerine der allgemeinen Formel (I) zugibt, bei denen n für eine Zahl im Bereich von 3 bis 12 steht.

4. Verfahren nach Anspruch 1 oder 2, dadurch gekennzeichnet, daß man dem Filtrat des Bayer-Verfahrens Polyglycerine der allgemeinen Formel (I) in einer Menge von 0,01 bis 5 g/l zugibt.

5. Verfahren nach Anspruch 4, dadurch gekennzeichnet, daß man dem Filtrat des Bayer-Verfahrens Polyglycerine der allgemeinen Formel (I) in einer Menge von 0,05 bis 2 g/l zugibt.

## Claims

1. A process for the formation of an aluminium oxide trihydrate crystallizate by the Bayer process by
- digestion of crushed bauxite
- removal of the red mud
- cooling of the filtrate and
- crystallization of the dissolved aluminium hydroxide as hydrargillite,
characterized in that polyglycerols corresponding to general formula (I)
H-(OCH₂CHOH-CH₂)ₙ-OH (I)
in which n is an integer of, or greater than, 3, are added before and/or during the crystallization phase.

2. A process as claimed in claim 1, characterized in that polyglycerols corresponding to general formula (I), in which n is a number of 3 to 30, are added.

3. A process as claimed in claim 2, characterized in that polyglycerols corresponding to general formula (I), in which n is a number of 3 to 12, are added.

4. A process as claimed in claim 1 or 2, characterized in that polyglycerols corresponding to general formula (I) are added to the filtrate of the Bayer process in a quantity of 0.01 to 5 g/l.

5. A process as claimed in claim 4, characterized in that polyglycerols corresponding to general formula (I) are added to the filtrate of the Bayer process in a quantity of 0.05 to 2 g/l.

## Revendications

1. Procédé de formation de cristaux d'oxyde d'aluminium trihydraté selon le procédé Bayer par :
- dissolution de la bauxite broyée,
- séparation de la boue rouge,
- refroidissement du filtrat et,
- recristallisation de l'hydroxyde d'aluminium dissout sous forme d'hydrargilite, caractérisé en ce qu'on ajoute avant et/ou pendant la cristallisation des polyglycérines de formule générale (I).
H-(OCH₂CHOH-CH₂)ₙ-OH (I)
dans laquelle n est un nombre entier supérieur ou égal à 3.

2. Procédé selon la revendication 1, caractérisé en ce qu'on ajoute des polyglycérines de formule générale (I), dans lesquelles n est un nombre compris entre 3 et 30.

3. Procédé selon la revendication 2, caractérisé en ce qu'on ajoute des polyglycérines de formule générale (I), dans lesquelles n est un nombre compris entre 3 et 12.

4. Procédé selon la revendication 1 ou 2, caractérisé en ce qu'on ajoute au filtrat du procédé Bayer des polyglycérines de formule générale (I) en une quantité de 0,01 à 5 g/l.

5. Procédé selon la revendication 4, caractérisé en ce qu'on ajoute au filtrat du procédé Bayer des polyglycérines de formule générale (I) en une quantité de 0,05 à 2 g/l.
